# EUROPEAN PATENT APPLICATION

(11) **EP 2 803 896 A1**
(43) Date of publication of application: **19.11.2014**
(21) Application number: 13167790.8
(22) Date of filing: 15.05.2013
(51) Int. Cl.: F16N 13/16, F16N 11/04, F16N 7/38

(54) **Grease unit**

(71) Applicant: Korihuolto Moksi Oy, 02920 Espoo (FI)
(72) Inventor: Moksi, Jukka, 02920 Espoo (FI)
(74) Representative: Kupiainen, Juhani Kalervo

(57) **Abstract**

A grease unit especially for tail lifts, consisting of a cylindrical grease container (1) provided with a grease press, such as a spring-loaded (2) press piston (3) pressing grease into a dosage cylinder (4) which forms part of the grease unit and by means of which the grease can be pressed out onto the objects (6) to be greased. The dosage cylinder (4) is coupled to the drive power of the tail lift, i.e. the hydraulic system (5), with the result that the device works always when the tail lift is used and greases any necessary areas (6) of the tail lift.

## Description

This invention relates to a grease unit, especially for tail lifts, consisting of a cylindrical grease container provided with a grease press, such as a spring-loaded press piston pressing grease into a dosage cylinder which forms part of the grease unit and by means of which the grease can be pressed out onto the object to be greased.

Hydraulic devices are greased by either maintenance staff or industrial grease devices. The industrial devices are mainly electrically driven, time-based devices. Their life span is relatively short compared to devices having a tail lift, man lift, loading lift etc. installed thereon. As a rule, these devices are not greased at all. If these devices were greased regularly, they would serve safely years and years. If any of these devices is not greased for a long time, the device is so expensive to repair that it is no longer economically sensible to repair it. Some devices may have even dozens of articulated shafts that need to be greased.

The grease unit according to the invention is developed especially for tail lifts. In continual, so-called delivery driving, service is needed at least once a week. It is not rare that a tail lift moves up and down up to fifty times a day. Such a service schedule is almost impossible to follow and, in addition, relatively expensive. As stated above, the current situation is that tail lifts are normally not greased. This causes unreasonable wear to them. This, on the other hand, causes dangerous situations as the piston rods of the articulated shafts break with the result that the tail lift falls onto the ground in an uncontrolled manner. When accidents happen, the inspection report of the tail lift is usually checked. It is impossible for the checker to estimate the usage rate of the tail lift. As a result, the purpose of the yearly checkup is not achieved, in other words the tail lift is in a good condition at the checkup but will thereafter not be serviced for a year, thus causing a risk of damage. The service intervals of machines and devices are becoming longer and longer, the price of human labor is rising all the time and there is no labor available for unpleasant jobs. The same problem is apparent with such devices as man lifts, loading lifts, excavators etc.

The object of the invention is eliminate the above-mentioned problems. The grease unit according to the invention is **characterized in that** the dosage cylinder is coupled to the drive power of the tail lift, i.e. the hydraulic system, with the result that the device works always when the tail lift is used and greases any necessary areas of the tail lift.

The dependent claims describe different embodiments of the invention.

The inventive grease unit developed by us has properties that differ from the properties of the other grease devices. The simplicity of the grease unit makes it very operationally reliable. Because the grease unit uses the drive power of the tail lift, i.e. the pressure of the hydraulic oil, the grease unit works always when the tail lift is used. The compression force of the grease unit creates a pressure of hundreds of bars. This is an excellent property in view of the operational conditions that the grease unit is subjected to, such as arctic conditions, road salt mixed with water, pitch mass mixed by tires and asphalt, vibration and heat. The invented device handles all of these situations, thanks to its high performance.

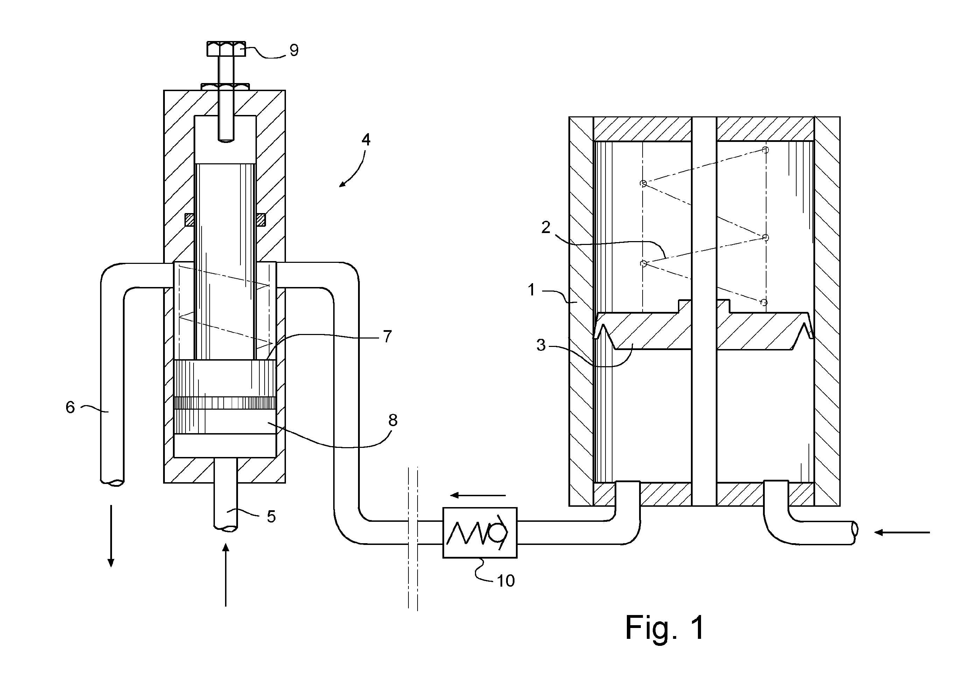

The invention will be described in the following by means of an example, with reference to the accompanying drawings in which
Figure 1 is schematic view of the grease unit, and
Figure 2 shows a grease unit having two dosage cylinders.

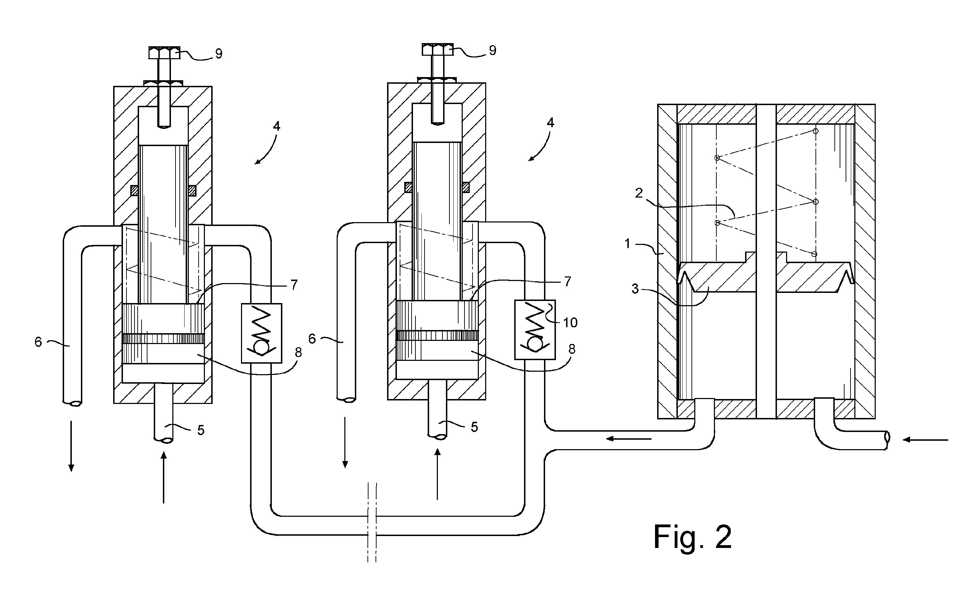

There can also be more than two dosage cylinders connected in series, as shown in Figure 2.

The grease unit consists of a cylindrical grease container 1 having a spring-loaded 2 press piston 3 pressing grease into a dosage cylinder 4 which forms part of the grease unit and by means of which the grease can be pressed out onto the objects to be greased. The dosage cylinder is coupled to the drive power of the tail lift, i.e. the hydraulic system 5, with the result that the device works always when the tail lift is used and regularly greases any necessary areas 6 of the tail lift. The dosage cylinder 4 encloses a grease pressing piston 7 connected to an operating piston 8. The area of the press piston 7 in the dosage cylinder is approximately half of the area of the operating piston subjected to the hydraulic pressure 5 from the hydraulic system. Thus, the grease pressure on the objects to be greased can be approximately 400 to 420 bar. The stroke length of the grease pressing piston can be adjusted by means of an adjustment screw 9 provided at the end of the dosage cylinder. This makes it possible to adjust the grease dose. A check valve 10 is provided between the grease unit 1 and the dosage cylinder 4 preventing the grease from flowing back into the grease container during the use of the dosage cylinder. The grease container 1 does not necessarily have to be a tubular cylinder but it can also be a container in any other shape.

Besides, the grease unit can be one entity wherein the grease unit 1 and the dosage cylinder 4 are joined together without hoses or pipes. The check valve 10 can be placed between the joining points. This embodiment is not shown in the figures.

## Claims

1. A grease unit especially for tail lifts, consisting of a cylindrical grease container (1) provided with a grease press, such as a spring-loaded (2) press piston (3) pressing grease into a dosage cylinder (4) which forms part of the grease unit and by means of which the grease can be pressed out onto the objects (6) to be greased, **characterized in that** the dosage cylinder (4) is coupled to the drive power of the tail lift, i.e. the hydraulic system (5), with the result that the device works always when the tail lift is used and greases any necessary areas (6) of the tail lift.

2. A grease unit as defined in claim 1, **characterized in that** the dosage cylinder (4) encloses a grease pressing piston (7) connected to an operating piston (8) and **in that** the area of the press piston (7) in the dosage cylinder is approximately half of the area of the operating piston (8) subjected to the hydraulic pressure (5) from the hydraulic system.

3. A grease unit as defined in claim 1 or 2, **characterized in that** the stroke length of the grease pressing piston (7) can be adjusted by means of an adjustment screw (9) provided at the end of the dosage cylinder (4).

4. A grease unit as defined in claim 1, 2 or 3, **characterized in that** a check valve (10) is provided between the grease unit (1) and the dosage cylinder (4) preventing the grease from flowing back into the grease container during the use of the dosage cylinder.
